## Europäisches Patentamt
## European Patent Office
## Office européen des brevets

(19)

(11) Publication number: **0 087 493**
**B1**

(12)

# EUROPEAN PATENT SPECIFICATION

(45) Date of publication of patent specification: **12.11.86**

(51) Int. Cl.⁴: **F 16 K 17/194, F 16 K 17/36**

(21) Application number: **82103279.4**

(22) Date of filing: **19.04.82**

(54) Safety and venting valves and cap for fuel tanks carried on vehicles.

(30) Priority: **01.03.82 US 353489**

(43) Date of publication of application:
**07.09.83 Bulletin 83/36**

(45) Publication of the grant of the patent:
**12.11.86 Bulletin 86/46**

(84) Designated Contracting States:
**AT BE CH DE FR GB IT LI LU NL SE**

(56) References cited:
**DE-B-1 150 850**
**FR-A- 853 806**
**GB-A- 405 385**
**US-A-1 724 878**
**US-A-2 919 707**
**US-A-4 050 471**

(73) Proprietor: **GT Development Corporation**
**605 Riverside South**
**Seattle, WA 98108 (US)**

(72) Inventor: **Green, Charles J.**
**Rt. 1, Box 510**
**Vashon Washington (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

### Background of the Invention

There is a legal requirement that vent valves on fuel tanks on highway trucks be closable automatically, so that if a truck is tilted or tipped over, there will be no spillage of fuel through the vent valve. It is also necessary that the vent valve be open during normal operation to allow air into the tank as the fuel therein is decreased, and to allow gas to flow out of the tank if the fuel is being increased in the tank. The requirements are the same when the tank and/or the fuel therein contracts or expands. It is also necessary that there be safety releases against excessive pressure and excessive temperature in a fuel tank.

Government regulations require that all fuel tank vent valves be designed to prevent liquid spillage at any attitude of the fuel tank.

The French patent to Bloch, no. 853,806 presents a ball container within a body, having a buoyant ball normally positioned vertically above a heavy ball. However, there is no adequate chamber in the body for spinning the ball around a central axis of the body nor are there means to cause it to spin. If the buoyant ball in the French patent were held by the liquid to be near the seat, it could easily be seated by gas flow rather than by the liquid.

A U.S. patent to Seidler, No. 2,919,707 does not have provision for rotating a buoyant ball and it appears that it would tend to seat too easily under the influence of gas venting from tank.

U.S. patent No. 785,594 to Crispin does not provide a space for rotation of the valve nor does it provide means to cause it to rotate. It appears that the Crispin valve is not meant to prevent spillage on tilting because if it were quickly tilted, the liquid could easily flow out of the orifices directly above the ball where the liquid would be closer to the outlet than the ball.

The invention has an object to improve the known venting device and in particular to prevent premature closing by the closure ball.

This is achieved by a vent passageway as defined in claim 1.

DE—B—1,150,850 also discloses a venting valve including means to prevent premature rising of a lightweight closure ball in the venting gas stream. These means are, however, more complex than those of the present invention.

### Summary of the Invention

The present invention is an improved venting device for use in tanks which are carried by highway trucks. The device is comprised of a venting passageway or valve which is adapted to be installed so as to have a flow path therethrough to extend generally vertically and which does not shut off venting until the valve body or the flow path axis has been tilted more than 105°.

A valve sealing member, a ball operative to close the valve, is buoyant and of very light weight so that it will seal in any position of the valve when the liquid level in the tank enters the valve and rises so as to float the ball onto the seat. This prevents the tank from overflowing as it is being filled, for example. In the same manner as the tank is tilted and the liquid level rises in the valve, the sealing ball will close the valve as it is floated toward and onto the valve seat.

The sealing ball is contained within a spin chamber housing into which the venting gas is directed tangentially so as to rotate the light weight ball. The spin chamber is generally circular, having diameters decreasing toward the valve seat and this arrangement prevents the sealing member from seating during normal venting.

The venting passage through the housing is enlarged over that of the best known prior art to provide for greater gaseous flow volume in both directions. This is made possible by the spinning arrangement which permits the sealing ball to be spaced a considerable distance from the seat during gaseous outflow and inflow.

A heavy ball in the spin chamber normally rests on the bottom thereof and when the valve body is tilted sufficiently, the heavy ball moves the sealing ball onto the valve seat. This shuts off venting and prevents spilling of liquid from the tank in the tilt position.

A second heavy ball upwardly of the spin chamber rides on a channel adjacent the outlet thereof but does not seat on or seal the outlet. The second heavy ball functions to remove the sealing ball from the seat by contact through the outlet when the valve is vertical and the liquid level which had floated the sealing ball onto the seat has receded. The sealing ball because of its light weight would remain on the seat if any tendency to vent existed in such a situation; thus, the outer heavy ball is required to remove it from the seat to allow venting to occur. Location of the second heavy ball on the channel results in such ball offering no resistance to the seating ball as it seats. The channel also results in a larger flow area for venting air around the second heavy ball than in the prior art.

The valve body is also constructed to provide an enlarged outlet when pressure in the tank exceeds a predetermined amount. A low melting point ring fits on the valve body to open it completely by removal of its top at a predetermined temperature.

Further objects and advantages of the invention may be brought out in the following part of the specifications wherein small details have been described for the competence of disclosure, without intending to limit the scope of the invention which is set forth in the appended claims.

### Brief Description of the Drawings

Referring to the accompanying drawings, which are for illustrative purposes;

Fig. 1 is an elevational cross-sectional view of a venting valve according to the invention, taken along the line 1—1 in Fig. 2, as it is positioned vertically in an upper part of a fuel tank;

Fig. 2 is a cross-sectional plan view taken along the line of 2—2 in Fig. 1 and rotated 90°;

Fig. 3 is a partially cross-sectional view taken along the line 3—3 in Fig. 1 and rotated 90°;

Fig. 4 is a perspective view of an upper portion of a valve spin chamber housing;

Fig. 5 is a cross-sectional view taken substantilly along the line 5—5 in Fig. 4;

Fig. 6 is an exploded isometric view of the valve shown in Fig. 1;

Fig. 7 is a view similar to Fig. 1, illustrating the operation within the spin chamber during venting;

Fig. 8 is an elevational view similar to Fig. 7, illustrating the closing of the valve by a high liquid level;

Fig. 9 is a view of the valve in a substantially tilted, venting position;

Fig. 10 is a view of the valve in which it has been tilted sufficiently to be held closed so as not to vent or spill;

Fig. 11 is an elevational view of the valve, illustrating its operation when the tank pressure has exceeded that allowed by the valve setting;

Fig. 12 is an elevational view of the valve, illustrating its operation when the upper allowed to temperature has been exceeded;

Fig. 13 is a fragmentary cross-sectional view taken along the line 13—13 in Fig. 2;

Fig. 14 is a plan view of a cap for closing a fuel tank filling and venting tube, in accordance with the invention;

Fig. 15 is a side elevational view of the cap shown in Fig. 14 positioned on a filling and venting tube of a vehicle fuel tank;

Fig. 16 is a cross-sectional view of a cap according to the invention, taken along the line 16—16 in Fig. 14.

Fig. 17 is a fragmentary cross-sectional view, taken along the line 4—4 in Fig. 14.

Fig. 18 is a plan view of a cap according to the invention and having a lock for securing the cap to a vent tube; and

Fig. 19 is a cross-sectional view of a cap having a locking device, taken along the line 19—19 in Fig. 18.

Description of the Preferred Embodiment

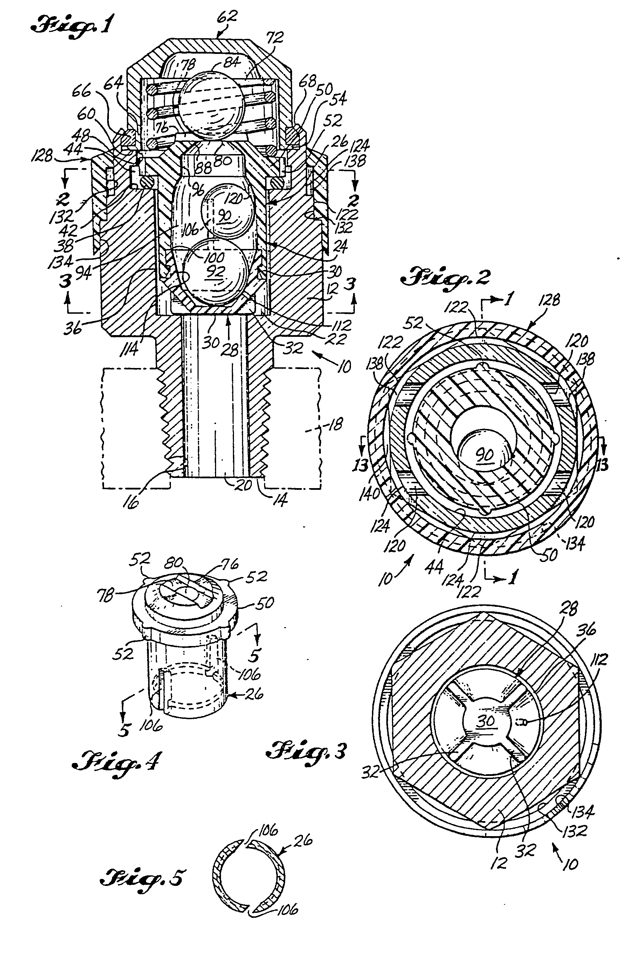

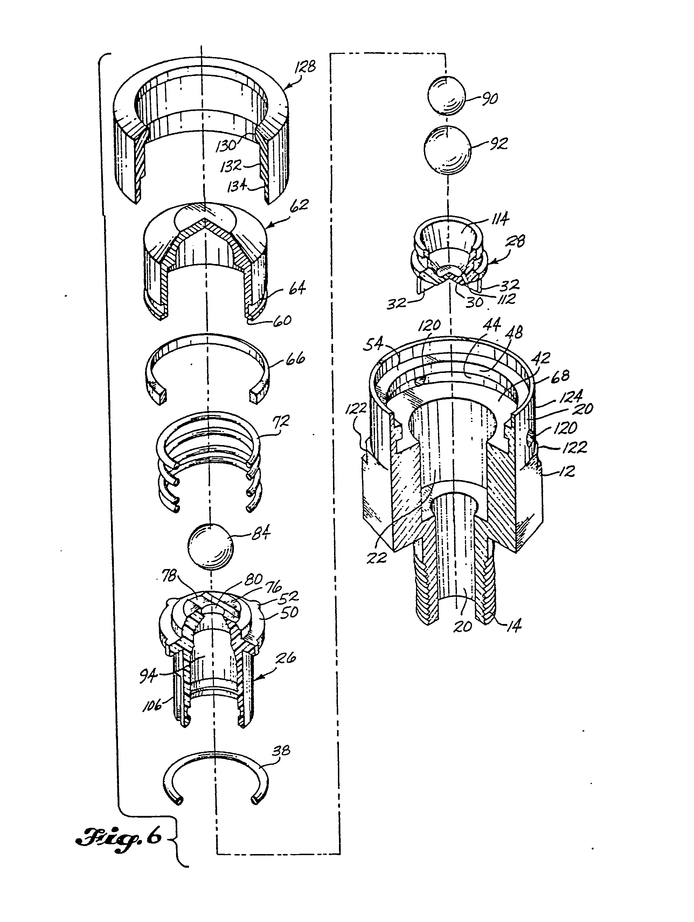

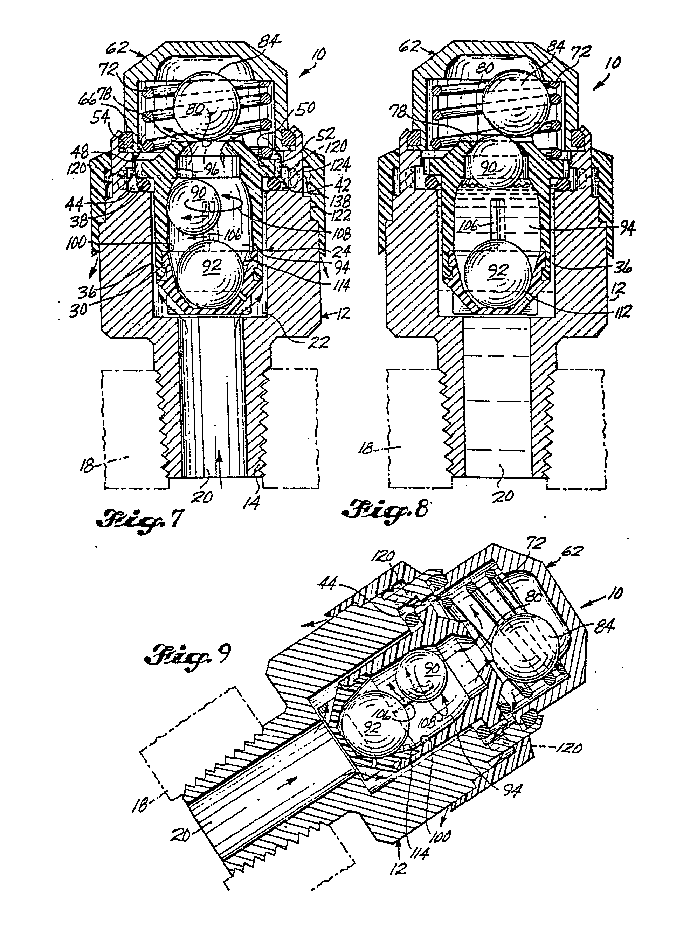

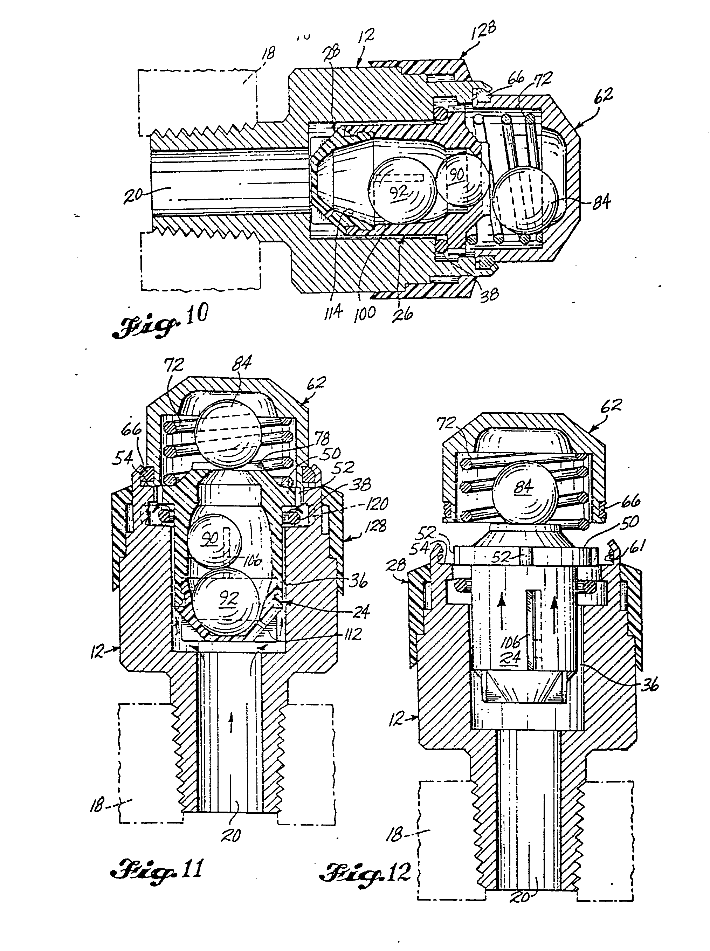

Referring again to the drawings, in Figs. 1—6, there is shown a venting valve 10 comprised of a main body 12 having an externally threaded stem 14 adapted to screw into a tapped bore 16 in an upper wall 18 of a fuel tank, carried on a motor vehicle, for example. The stem 14 has a passageway 20 communicating with an upper interior region of the fuel tank and with a cylindrical bore 22 in the valve body upwardly from the stem.

A two-art housing 24 is positioned within the cylindrical bore 22. It is comprised of a generally cylindrical upper part 26, Fig. 4, and a lower part 28, Figs. 1 and 6, the two parts being snap-fit together by means of alternate lands and grooves at 30. The housing parts are made of a resilient plastic which makes the snap-fit possible. The plastic is also relatively inert so as to not be affected by the liquid in the tank. The lower part 28 has a small diameter external bottom 30, Fig. 3, from which extends four radially-directed legs 32.

An annular passage 36 is formed in the space 22 between the outer housing wall and the cylindrical surface of the bore. Passage 20 connects the tank to the passage 36, normally sealed at its upper end by an O-ring 38 positioned on an annular shoulder 42 upwardly of the bore 22. The shoulder 42 terminates outwardly in an annular groove 44. Axially outwardly of the groove 44 is a cylindrical portion 48, forming an upper opening for the cylindrical portion 22 and of the main body of the valve 12.

An annular flange 50 extending radially outwardly from the housing portion 26 is normally sealing engaged with the O-ring seal 38 to close the upper end of the passage 36. Four protuberances 52, annularly spaced on the circumference of the flange 50, space the housing within the cylindrical portion 22 within the opening 48.

Axially outwardly of the opening 48 is an annular shoulder 54 on which an annular inner end 60 of a valve cap 62 is sealing engaged to close the upper end of the valve 10. Axially outwardly of the surface 60 is an annular groove 64 in which is positioned a sealing ring 66 having a low melting point such as 225°F (125°C) for example. Ring 66 is held in place by crimping annular edge 68 thereover, Figs. 1 and 6. A coil spring 72 has its upper and outer end in abutment with an upper surface of the cap and has its lower end in abutment with the upper surface of the flange 50 to hold the housing in a sealing position with respect to the passage 36 up to a tank pressure of 35 PSIG (241,3166 kPa) for example.

The housing 24 has an upper and outer surface 76, Figs. 1, 4 and 13, interrupted by a diametrically extending, substantially rectangular channel 78. The channel base is interrupted by an axially directed circular opening 80, forming an outlet for the housing 24. A heavy ball 84 is positioned to roll on channel 78 within the spring 72 as the result of the slightest tilt of the valve. The channel 78 is narrow enough to prevent the ball from extending-downwardly far enough to seat on the opening 80.

At the inner end of the outlet 80, a valve seat 88 is formed to receive a light weight, buoyant ball 90 to close the outlet, Figs. 8 and 10. In an inoperative position the ball, as shown in Fig. 1, rests on a lower heavy ball 92 of the same size and weight as the ball 84. The heavy balls are stainless steel and have diameters of 5/16″ (0,79 cm) for example.

The housing 24 has a substantially axially, elongated hollow spin chamber 94 formed of non-uniform circular cross sections. Inwardly of the seat 88 is a cylindrical wall surface 96 having a diameter large enough to permit the ball 90 to move therethrough so as to move easily onto the small diameter seat. An outwardly decreasing, diameter portion starts at 100 and continues into a restraining wall portion 102 which terminates in the cylindrical portion 96. The wall portion starting at 100 and terminating at 102 is effective during venting operations to be explained.

As best seen in Figs. 1, 4, 5, and 7, there are two diametrically opposed, tangentially directed slots 106 through the wall of the upper housing portion 26 so as to connect the housing with the tank through the passages 20 and 36. Venting flow out of the tank and into the hollow chamber 94 through the tangential slots 106 causes the light weight ball 90 to spin around the chamber wall, as indicated in Figs. 7 and 9 by the circularly directed arrows 108.

Most venting occurs during vehicle operation when fuel and entrained gases are returned from the engine to the tank. Venting also occurs when the tank is being filled and during expansion of the liquid when its temperature is raised. The ball 90 is 1/4 inch (0,63 cm) in diameter, for example, and may be made of polypropylene. It is so light in weight that it would easily move upwardly to seat at 88 by the slightest venting flow if it were not for the configuration of the interior of the housing between 100 and 102 and the tangential flow through the slots 106. The inlets 106 direct the gas raising from the fuel tank tangentially into the hollow chamber 94 and this causes the ball 90 to spin, Figs. 7 and 9, as indicated by the arrow 108, at relatively high velocity around the interior of the housing. The gas flow moves the ball upwardly along the converging surface between 100 and 102. Therefore, as the ball 90 rises it spins at a faster rate because it is forced radially inwardly by the decreasing diameters. The configuration of the wall particularly at 102 imparts a downwardly directed component to the centripetal force acting on the ball.

As shown in Fig. 8, if fuel rises in the vent for any reason, to a predetermined level upwardly through the passages 20, 36, and into the housing portion 94 so as to lift the buoyant ball 90 onto the seat 88. This action will prevent spillage to the extent that the valve will hold the pressure induced by the excessive liquid.

The seating of the ball 90 by being floated onto the seat by the liquid is most important under situations where the tank is tilted and the liquid is not increased within the tank but rises with respect to the position of the tilted valve so as to seat the ball. Thus, the tilting is prevented from causing spillage. A drain opening 112 is provided through the bottom portion of the housing to allow the liquid to drain therefrom when the level in the tank is lowered so as to be below the housing.

When the buoyant force is removed from the ball 90, the heavy ball 84, which moves freely in the channel 78, back and forth against the spring 72 at the slighest motion of the tank, would move from its position in Fig. 8 across the outlet 80 so as to move the light weight ball 90 off the seat and cause it to resume its position against the ball 92 if the tank is not venting or if the air is flowing into the tank from the exterior.

When the liquid level rises and the valve is substantially vertical, the light weight ball 90 moves onto the seat and in so moving moves the ball 84 away from the opening, ball 84 offering essentially no resistance to such movement, as shown in Fig. 8. The only function of the ball 84 is to force the light weight ball 90 off the seat after the liquid level is lowered with respect to the ball 90. The action of the ball 84 is necessary because any gas pressure in the housing portion 94 or any flow of gas therein will hold the light weight ball on the seat after the liquid is lowered.

As shown in Fig. 1 when the valve is generally vertical, the ball 92 is seated on the bottom of the interior surface of the lower member 28 of the housing. In this position an upper portion of the ball is in tangential engagement with conical internal wall surface 114, inclined upwardly and outwardly. The angle of the surface 114 is about 70° with the horizontal. This allows substantial tilting of the tank and valve Fig. 9, before the ball 92 is caused to roll on the surface 114 toward the outlet 80 of the housing. As shown in Fig. 9, the valve is constructed to perform its venting function even when the fuel tank is tilted substantially. The venting is stopped on tilt only when the ball 92 moves the ball 90 onto the seat or when the liquid level in the housing causes the ball to move onto the seat. The ball 92 does not move axially within the housing until the wall 114 dips below the horizontal position, as shown in Fig. 10. Because of its inclination the surface 114 does not reach a horizontal position until the angle of tilt is above 75°. Then the ball 92 moves along that surface until it moves onto the surface at 100, where if tilting stops, the ball should come to a position of rest until further tilting occurs. When it does, it rolls along the surface at 100 a sufficient distance to push the ball 90 onto the seat into a sealing relationship. This stops the venting of the tank and also prevents any spillage of the liquid because of the tilt, if the valve has not already sealed due to presence of liquid.

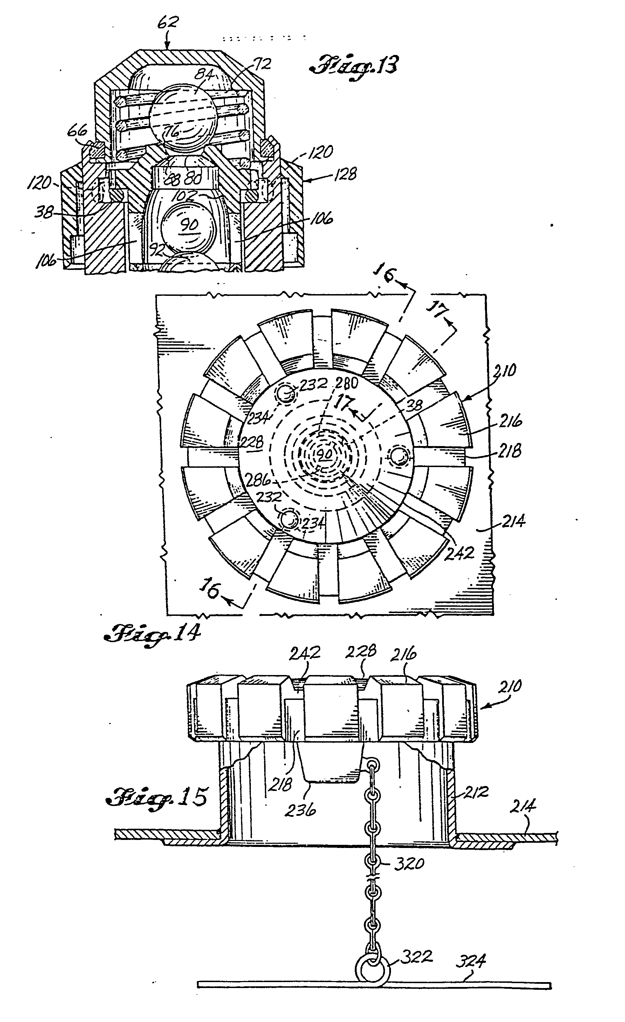

As shown in Figs. 1, 2, 6, 7, 9, and 13, the flow passage, for venting and for inlet of air into the tank from the housing outlet 80, extends through the cap 62 around the circumference of the flange 50 of the housing into the annular groove 44 and through four passages 120 through the wall of the valve body 12. As shown in Figs. 2 and 6, the lower portion of the body 12 is hexagonal and upper portion of the hexagonal corners at 122 are cutaway to form cylindrical corner portions. Directly above is a continuous cylindrical wall 124 through which the cylindrical passages 120 extend.

In Figs. 1, 2, 6, 7, and 13, a generally cylindrical dust cap 128 is shown. The dust cap has three inner cylindrical surfaces 130, 132, and 134 and is fitted over the upper portion of the body 12. The cylindrical surface 132 covers the upper body wall 124 and spaced between the upper portion of the surface 132 and the wall 124 is an annular groove 138 in communication with the passages 120. The lower portion of the wall 132 is fitted over the hexagonal portion of the body and is in contact with the cutaway corners 122. The lower wall 134 is in contact with the points of the corners but no portion of the cap is in contact with the flat side portions of the hexagonal part of the body. The wall 134 is substantially spaced from the flat portions of the hexagonal and the lower portion of the wall 132 is spaced a lesser amount from the flat portions of the hexagonal to form a vertical passage 140, Figs. 2, 3, and 13. As may be seen in Figs. 2, 6, and 13, the passages 120 are in communication with the grooves 138 which are in communication with the vertical passages 140, open to the atmosphere, as indicated in Figs. 7 and 9, where the venting flow is shown by the arrows.

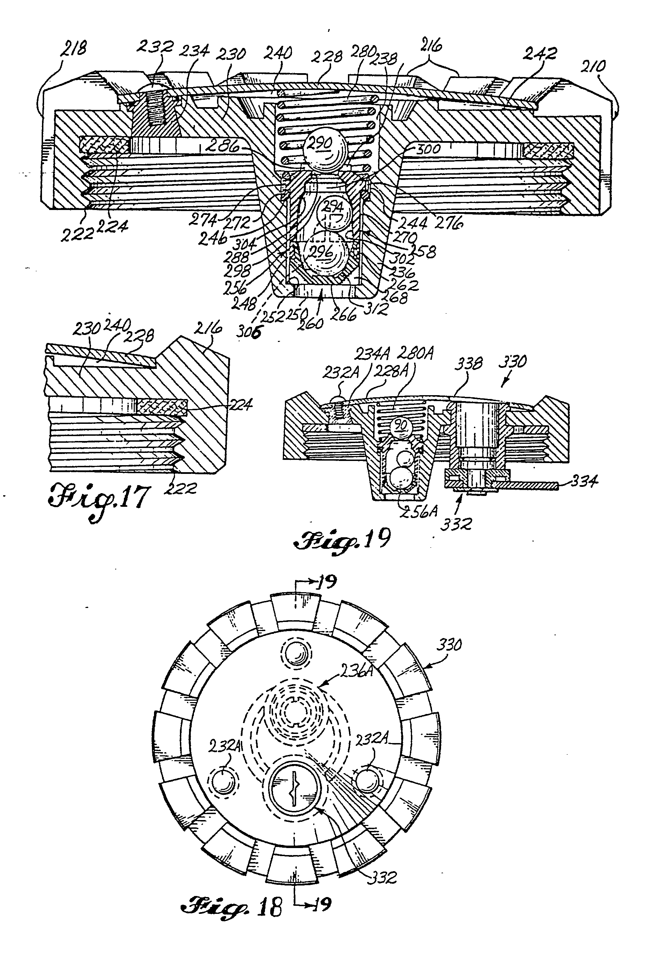

In Fig. 11, the operation of the valve is illustrated under circumstances where the pressure in the tank exceeds the stored energy force of the spring 72. Vent valves for vehicle carried fuel tanks are typically set to relieve the tank pressure when it exceeds 20 PSIG (137, 89 kPa). When the pressure reaches that level the entire housing 24 is lifted, pressure being exerted on the external portions of the housing including the flange 50, which operates against the spring 72. When the flange is lifted off the O-ring, 38, the tank pressure is released directly through annular passage 36 into the horizontal passages 120, open to the atmosphere through the passages 140.

In Fig. 12, the operation of the valve is shown when the temperature of the melt ring 66 exceeds its melting point, which is typically 255°F (141°C) for such installations. When this occurs the melt ring 66 disintegrates, and the spring 72 lifts the cap off the valve body so that gas or liquid can be discharged from the tank rather than have the tank explode. Under such conditions the housing 24 would typically be blown out of the valve body.

In summary, the valve 10 is shown in Fig. 1 in its normal vertical position secured adjacent the top of a fuel tank carried on a motor vehicle. Here, the valve is open for venting but venting is not occuring although air may be flowing into the tank through the valve.

In Fig. 7 the valve is shown in a normally vertical position and is venting as it would while the tank is being filled or while the gas within the tank is expanding, and thus flowing from the tank through the valve. It flows through the passage 20, into the passage 36, through the two tangentially directed, slot-shaped openings 106 in the wall of the housing 24. The tangential direction of the slots causes the gas to move in a circular direction as indicated by the arrow 108 and this causes the lightweight valve closing ball 90 to rotate around the housing chamber 94.

The spinning of the ball 90 in the decreasing diameter arrangement between 100 and 102 prevents the ball 90 from seating on its seat 88 so as to permit the valve to continue venting as required. The ball 84 never seals the opening 80 at the top of the housing and gas flows around the ball through the channel 78 into the cap 62, through the passages 120, and groove 138, and the passages 140 to the atmosphere, as indicated by the arrows in Fig. 7.

In the event the liquid level rises sufficiently to cause the buoyant valve closing ball 90 to be lifted it will move onto its seat 88 and prevent the discharge of liquid through the vent valve. In Fig. 8 the vent valve is shown in the generally vertical position where a continual rise in liquid level would cause the pressure to increase so as to lift the housing flange 50 off the O-ring 38 as shown in Fig. 11. Its sealing by lifting the ball 90 onto its seat is provided more for the situation where the tank would be sufficiently tilted to cause the liquid to flow into the valve housing and be spilled if it were not for the valve 90 being moved onto its seat.

In the situation shown in Fig. 8, the heavy ball 84 has been moved out of the vicinity of the opening 80 by the floating of the valve ball 90 onto the seat. The ball 84 is almost in constant movement during the operation of the vehicle. It is free to move in its channel back and forth against the interior of the spring 72. When the liquid level is lowered so that it no longer causes the ball 90 to float, the ball 90 would tend to remain on the seat because of the probable pressure in the tank, a very slight pressure being sufficient to hold the ball in its seating position once it has been forced there. It this should occur the ball 84 in its movement back and forth will move the valve ball 90 off of its seat to a venting position, as shown in Fig. 7 or into a non-operating position as shown in Fig. 1.

The valve has an inbetween position in which the steel ball 92 in not yet influenced by gravity to move ball 90 into a seated position and the buoyant forces are directed away from the seat. Ball 90 will still seat in the presence of liquid because it is only slightly buoyant and will be moved into a seated position by slight amounts of liquid flow.

Fig. 9 illustrates the operation of the valve during venting in a substantially tilted position. The ball 84 has been moved against the spring by the tilt and the valve ball 90 is being spun within the chamber 94 by the tangential direction of the venting flow through the housing.

In Fig. 10 the valve is shown tilted a sufficient amount to cause the ball 92 to gravitate against the ball 90 and move it onto the seat 88. In this situation venting cannot occur and a spillage also cannot occur if the liquid should be of a sufficient amount to move into the valve because of the tilting.

Referring again to the drawings, in Figs. 14—17, there is shown a cap 210 for closing a fuel tank filling and venting tube 212 extending outwardly from a tank 214. The cap has large annularly spaced gripping serrations or lugs 216 extending radially from a generally cylindrical cap body 218.

As shown in Fig. 16, the underside of the cap has a tapped bore 222 for securing to external threads, not shown, on the tube 212. Inwardly of the threads is an annular gasket 224 for sealing along the upper outer edge, not shown, of the tube.

Inwardly of the inner ends of the lugs 216 is a centrally positioned convex circular cover plate 228 secured to a cap body portion 230 by screws or fettered drive pins 232. The fasteners 232 are secured in low melting point, generally frusto-conical inserts 234. The inserts 234 are adapted to melt at 255 degrees F., (141°C) for example, and are formed in the body 230 as a liquid. When cooled, they solidify and are secure in place because of their frusto-conical configuration.

Centrally within the body portion is a tubular member 236 forming a tank venting flow path comprised of a large diameter cylindrical portion 238, opened to the top of the body portion and to flow areas 240 within the body portion 230 and the plate cover 228. The flow area 240 is in communication with the atmosphere through flow paths 242 extending between the lugs 216 and under the cover plate.

Axially inwardly of the passage portion 238 is a countersunk cylindrical bore 244, terminating in an annular shoulder 246 and inwardly thereof is a smaller diameter passage 248 which is in communication with inner small diameter portion 250, open to the tube 212 and the tank 214. Inwardly of the passage portion 250 is an annular radially directed shoulder 252.

A two-part valve body 256, Fig. 3, is positioned within the bores 244 and 248 of the tubular member 236. It is comprised of a generally cylindrical part 258, and a lower part 260, the parts being snap-fit together by means of alternate lands and grooves at 262. The valve body parts are made of a resilient plastic which makes the snap-fit possible. The plastic is relatively inert so as to not be affected by the liquid in the tank. The lower part 260 has a small diameter external bottom 266, from which extends four radially-directed spaced legs 268 supported upon the annular shoulder 252.

An annular passage 270 is formed between the valve body and the cylindrical surface of the bore 248. The passage 250 connects the tube and tank to the passage 270, normally sealed at its upper end by an O-ring 272 on the annular shoulder 246. An annular flange 274, extending radially outwardly from the valve body part 258 is normally sealingly engaged with the O-ring 272 to close the upper end of the passage 270. Four protuberances 276, annularly spaced on the circumference of the flange 274, space the valve body within the cylindrical bore 244.

A coil spring 268 has its upper end in abutment with the inner concave surface of the cap cover 228 and has its lower end in abutment with the upper surface of the flange 274 to hold the valve body in a sealing position with respect to the passage 270 to a tank pressure of from 10 (68,94 kPa) to 25 PSIG. (172 kPa) for example. The upper valve body portion 258 has an upper and outer pair of spaced surfaces 284, interrupted by a diametrically extending, substantially rectangular channel 286. The channel base is interrupted by an axially directed circular opening 288, forming an outlet for the upper portion of the valve body. A heavy ball 290 is positioned to roll, on channel 286 within the spring 280 as a result of the slightest tilt of the valve body. The channel 286 is narrow enough to prevent the ball 290 from extending downwardly far enough to seat on the opening 288.

At the inner end of the outlet 288, a valve seat 292 is formed to receive a light weight buoyant ball valve 294 to close the outlet 288, Figs. 16. In a static position, the ball 294 rests on a lower heavy ball 296 of the same size and weight of the ball 290. The heavy balls are stainless steel and have diameters of 5/16 inch (0,79 cm), for example.

The upper valve body portion 258 has a substantially axially, elongated hollow spin chamber 298 formed of non-uniform circular cross sections. Inwardly of the seat 292 is a cylindrical wall surface 300 having a diameter large enough to permit the ball 294 to move therethrough so as to move easily onto the smaller diameter seat 292. An outwardly decreasing, diameter portion starts at 302 and continues into a restraining wall portion 304, terminating in the cylindrical portion 300. The wall portion starting at 302 and terminating at 304 is effective during venting operations to be explained.

As shown in Figs. 16 to 19, there are two diametrically opposed, tangentially directed slots 306 through the wall of the upper valve body 258 so as to connect the valve with the tank through the passages 250 and 270. Venting flow out of the tank and into the hollow chamber 298 through the tangential slots 306 causes the light weight ball 294 to spin around the chamber wall.

Most venting occurs during vehicle operation when fuel and entrained gases are returned from the engine to the tank. Venting also occurs when the tank is being filled and during expansion of the liquid when its temperature is raised. The ball 294 is 1/4 inch (0,63 cm) in diameter, for example and may be made of polypropylene. It is so light in weight that it would be easily moved upwardly to seat at 292 by the slightest venting flow if it were not for the configuration of the interior of the valve body part between 302 and 304 and the tangential flow through the slots 306. Thus the ball 294 is caused to spin at relatively high velocity around the interior of the valve body. The gas flow moves the ball upwardly along the converging surface between 302 and 304. Therefore, as the ball rises it spins at a faster rate because it is forced radially inwardly by the decreasing diameters.

The configuration of the wall, particularly at 304, imparts a downwardly component to the centrifugal force on the ball and prevents it from moving onto the seat 292 during normal venting of the tank. Stated differently, the rotation of the ball 294 against the smaller diameter portions of the wall increases the centripetal force on the ball to cause it to continue to rotate relatively toward the center of the chamber, and thus prevents it from moving upwardly toward the seat.

If fuel rises in the vent for any reason, to a predetermined level upwardly through the passages 250 and 270, and into the chamber 298, the buoyant ball 294 is moved onto the seat 292. This action will prevent spillage to the extent that the valve will hold the passage induced by the excessive liquid.

The seating of the ball 294 by being floated by the liquid is most important under situations where the tank is tilted and the liquid is not increased within the tank, but rises with respect to the position of the tilted valve. Thus, the tilting is prevented from causing spillage. A drain opening 312 is provided through the bottom part 260 of the valve body to allow the liquid to drain therefrom when the level in the tank is lowered so as to be below the valve 256.

When the buoyant force is removed from the ball 294, the heavy ball 290, which moves freely in the channel 286, back and forth against the spring 280 at the slightest motion of the tank, moves from a position out of register with the opening 288 across the opening so as to move the light weight ball 294 off the seat and cause it to resume its position against the ball 296, Fig. 16, if the tank is not venting or if the air is flowing into the tank from the exterior. When the liquid level rises and the valve is substantially vertical, the light weight ball 294 moves onto the seat and in so moving moves the ball 290 away from the opening, the ball 290 offering essentially no resistance to such movement. The only function of the ball 290 is to force the light weight ball 294 off the seat after the liquid level is lowered with respect to the ball 294. The action of the ball 290 is necessary because any gas pressure in the chamber 298 or any flow of gas therein will hold the light weight ball on the seat after the liquid is lowered.

As shown in Fig. 16, when the valve is generally vertical, the ball 296 is seated on the bottom of the interior surface of the part 260 of the valve body. In this position, an upper portion of the ball is in tangential engagement with conical internal wall surface 314, inclined upwardly and outwardly. The angle of the surface 314 is about 70 degrees with the horizontal. This allows substantial tilting of the tank and valve before the ball 296 is caused to roll on the surface 314 toward the outlet 288 of the valve body portion 258. The valve is constructed to permit its venting function even when the fuel tank is tilted substantially. The venting is stopped on tilt only when the ball 296 moves the ball 294 onto the seat or when the liquid level in the valve body causes the ball to move onto the seat. The ball 296 does not move axially within the housing until the wall 314 dips below the horizontal position. Because of its inclination, the surface 314 does not reach a horizontal position until the angle of tilt is above 75 degrees. The ball 296 moves along that surface until it moves onto the surface 302, where if tilting stops, the ball should come to a position of rest until further tilting occurs. When it does, it rolls along the surface at 302 a sufficient distance to push the ball 294 onto the seat into a sealing relationship. This stops the venting of the tank and also prevents any spillage of the liquid because of the tilt, if the valve has not already sealed due to the presence of the liquid.

As shown in Fig. 16, the flow passage, for venting and for inlet of air into the tank through the valve body outlet 288, extends through the large diameter bore 238 to the passage area 240 and through the multiple passages 242 between the lugs 216.

When the pressure in the tank exceeds the stored energy force of the spring 280, the valve body 256 is lifted, pressure being exerted on the external surfaces thereof including the under side of the flange 274, which operates against the spring 280. When the flange 274 is lifted off the O-ring 272, the tank pressure is released directly through the annular passage 244 into the bore 238, the area 240 and the outlets 242 to the atmosphere.

When the temperature of the inserts 234 in the cap body 230 exceeds their melting point which is typically 255 degrees F. (141°C) for such installations, the inserts disintegrate and the spring 280 lifts the plate cover 228 off of the cap body so that gas or liquid can be discharged from the tank rather than have the tank explode. Under such conditions, the valve body 256 would typically be blown out of the cap.

In summary, the cap 210 is shown in Fig. 15 in its normal vertical position secured on the top of a fuel tank filling and venting tube adjacent the top of a tank carried on a motor vehicle. In the position shown in Fig. 15, the valve is as shown in Fig. 16.

As shown in Fig. 15, there is a chain 320 attached to hang from the tubular member 236 into the tank 214 and on the lower end of the chain there is a loop 322 on a rod 324. The rod 324 is longer than the diameter of the tube 212 so as to normally keep the cap 210 secured to the tank when it is disengaged from the tube 212 for filling the tank. This arrangement allows the cap to hang down alongside the tube while it is secured within the tank by the rod.

In Figs. 18 and 19 there is a cap 330 which is substantially the same as the cap 210 in Figs. 14—17. The primary difference is the addition of a lock 332 to lock the cap to the filling tube and tank. When it is secured in place, the locking lever 334 is rotated by the key to extend into a notch in the inner wall of the filling tube.

In order to insert the lock in the cap structure, a tubular member 236A, the full equivalent of the tubular member 236 in Fig. 16, must be positioned off center. The tubular member 236A has the same bores to receive a spring 280A and a valve body member 256A as the spring 280 and the valve body 256 in Fig. 16. Similarly, a cap cover plate 228A is secured to the cap by means of fasteners 232A in low melting point inserts 234A. The cap cover plate is different from that shown in Fig. 16 only to the extent of the requirement of an opening 338 to permit access to the lock.

The valve body 256A is rotated 90 degrees from that shown in Fig. 16 and the position of the upper heavy ball 290 in the channel is shown so as to illustrate the distance of the ball from the seat 292 for the ball 294.

## Claims

1. A passageway (24) adapted to permit gas flow but close to liquid flow, said passageway having a normally lower inlet and a normally upper outlet, and comprising: a circular outlet opening (80) at the upper end of a chamber; a light weight buoyant closure ball (90) in said chamber (94), said ball having a larger diameter than said outlet opening; and being lifted to seat on said outlet opening when liquid enters said chamber to a predetermined level, in order to close said outlet opening and block liquid flow out through the outlet opening, characterized by wall means defining a spin chamber (94) positioned between said inlet and said outlet, and having internal generally circular cross sections;

at least one side wall inlet opening into said chamber being tangentially directed with respect to said chamber (94) cross sections, whereby gas passing through the spin chamber will spin the closure ball (90, 294) around the chamber and prevent it seating on said outlet opening.

2. A passageway according to claim 1, characterized by a heavy ball (92, 296) in said passageway (24) below said light weight buoyant closure ball, adapted to move by gravity against said light weight ball (90, 294), and force said light weight buoyant ball onto said seat in response to a tilting of the passageway beyond a predetermined amount.

3. The passageway according to claim 1 in which said means defining said chamber cross sections include cross sections decreasing in area away from said inlet toward and adjacent said outlet opening (80) so that as the diameters become smaller the movement of the ball (90, 294) becomes faster to create a centripetal force having a downwardly directed component, which during normal venting, prevents the ball from moving toward the seat on said outlet opening.

4. The passageway according to claim 1 in which said means of said inlet opening to direct gas flow along the surface of said circular cross sections includes said inlet opening being slot-shaped (106, 306), the slot being elongated in the general direction of an axis through the centers of said circular cross sections.

5. The passageway according to claim 2 including: a second heavy ball (84, 290) associated with said passage to move said light weight ball (90, 294) from closing the passage when the liquid is below a predetermined level and the passageway is not tilted, so that the passage will be open for venting.

6. The passageway according to claim 1 in which said flow passage is normally open.

7. The passageway according to claim 1 including additional flow by-pass means operable when the pressure in the passageway exceeds a predetermined amount.

8. The passageway according to claim 7, including means associated with said passageway to substantially increase the area available for flow when the temperature in the passageway exceeds a predetermined amount.

9. The passageway according to claim 1 including a liquid drain opening (112) adjacent the bottom of said chamber.

10. A cap (210) for closing a fuel tank filling and venting tube, said cap being adapted to permit air and fuel vapor flow into or out of the tank but adapted to prevent liquid from escaping in any orientation of the tank from vertical to inverted, said cap comprising:

a cap body (230);

means associated with the cap body to secure it to the tube (212) for closing;

a cap cover plate (228) secured to the cap body (230) and adapted to extend across a portion of the cap (210) in a direction generally transverse to the axis of the tube (212), characterized by a passageway according to claims 1—9 and by a body passage connecting the exterior of the body (230) with the outlet of the vent passage.

11. The cap (210) according to claim 10 in which said means associated with the body passage include a plurality of low melting point body inserts (234) adapted to melt when the temperature exceeds said predetermined amount; said cap cover (228) being secured to said cap body (230) by screws threadedly engaged in said inserts, said screws being adapted to be disengaged when said inserts (234) melt.

12. The cap (210) according to claim 10 in which said body passage includes a plurality of passages (250, 270) extending outwardly from said outlet generally along the inner side of the cover plate (228).

13. The cap (210) according to claim 10 including a locking device (32) for locking said cap (210) on said tube (212) when said cap (210) is secured on said tube (212), said locking device (132) extending inwardly into said body and spaced from said vent passageway, adapted to make locking engagement within the tube (212).

## Patentansprüche

1. Durchlaßkanal (24), der so ausgebildet ist, daß er eine Gasströmung ermöglicht, gegen eine Flüssigkeitsströmung jedoch versperrt ist, wobei der Durchlaßkanal einen normalerweise unteren Einlaß und einen normalerweise oberen Auslaß aufweist und folgende Teile umfaßt: Eine kreisförmige Auslaßöffnung (80) am oberen Ende einer Kammer, eine ein geringes Gewicht aufweisende schwimmfähige Verschlußkugel (90) in der Kammer (94), wobei die Kugel einen größeren Durchmesser aufweist als die Auslaßöffnung und bei Eintreten einer Flüssigkeit in die Kammer bis zu einem vorgegebenen Pegel angehoben wird, um an der Auslaßöffnung anzuliegen, so daß die Auslaßöffnung geschlossen wird und eine Flüssigkeitsströmung aus der Auslaßöffnung heraus gesperrt wird, dadurch gekennzeichnet, daß Wandteile vorgesehen sind, die eine Spinkammer (94) bilden, die zwischen dem Einlaß und Auslaß angeordnet ist und innere allgemein kreisförmige Querschnitte aufweist, und daß zumindestens eine in der Seitenwand angeordnete Einlaßöffnung in die Kammer tangential bezüglich der Querschnitte der Kammer (94) gerichtet ist, so daß durch die Spinkammer hindurchströmendes Gas die Verschlußkugel (90, 294) in eine Drehung um die Kammer herum versetzt und verhindert, daß die Verschlußkugel an der Auslaßöffnung anliegt.

2. Durchlaßkanal nach Anspruch 1, dadurch gekennzeichnet, daß eine schwere Kugel (92, 296) in dem Durchlaßkanal (24) unterhalb der ein geringes Gewicht aufweisenden schwimmfähigen Verschlußkugel angeordnet ist und sich unter der Wirkung der Schwerkraft gegen die ein geringes Gewicht aufweisende Kugel (90, 294) bewegen kann, um die ein geringes Gewicht aufweisende schwimmfähige Kugel bei einem Kippen des Durchlaßkanals über ein vorgegebenes Ausmaß hinaus gegen den Sitz anzudrükken.

3. Durchlaßkanal nach Anspruch 1, dadurch gekennzeichnet, daß die die Kammer-Querschnitte bildenden Einrichtungen Querschnitte einschließen, deren Fläche von dem Einlaß in Richtung auf und benachbart zu der Auslaßöffnung (80) abnimmt, so daß, wenn die Durchmesser kleiner werden, die Bewegung der Kugel (90, 294) schneller wird, um eine Zentripetalkraft mit einer nach unten gerichteten Komponente zu schaffen, die bei der normalen Be- und Entlüftung eine Bewegung der Kugel in Richtung auf den Sitz an der Auslaßöffnung verhindert.

4. Durchlaßkanal nach Anspruch 1, dadurch gekennzeichnet, daß die Einrichtungen der Einlaßöffnung zum Lenken der Gasströmung entlang der Oberfläche der kreisförmigen Querschnitte eine schlitzförmige Ausgestaltung der Einlaßöffnung (106, 306) einschließen, und daß der Schlitz in der allgemeinen Richtung einer Achse durch die Mittelpunkte der kreisförmigen Querschnitte langgestreckt ist.

5. Durchlaßkanal nach Anspruch 2, dadurch gekennzeichnet, daß eine zweite schwere Kugel (84, 290) dem Kanal zugeordnet ist, um die ein geringes Gewicht aufweisende Kugel (90, 294) von einem Verschließen des Kanals fortzubewegen, wenn die Flüssigkeit unter einem vorgegebenen Pegel liegt und der Durchlaßkanal nicht gekippt ist, so daß der Kanal für eine Be- und Entlüftung offen ist.

6. Durchlaßkanal nach Anspruch 1, dadurch gekennzeichnet, daß der Strömungskanal normalerweise offen ist.

7. Durchlaßkanal nach Anspruch 1, gekennzeichnet durch zusätzliche Strömungs-Nebenschlußkanaleinrichtungen, die betätigbar sind, wenn der Druck in dem Durchlaßkanal einen vorgegebenen Betrag überschreitet.

8. Durchlaßkanal nach Anspruch 1, dadurch gekennzeichnet, daß dem Durchlaßkanal Einrichtungen zugeordnet sind, die die für die Strömung zur Verfügung stehende Fläche erheblich vergrößern, wenn die Temperatur in dem Durchlaßkanal einen vorgegebenen Betrag überschreitet.

9. Durchlaßkanal nach Anspruch 1, gekennzeichnet durch eine Flüssigkeitsablaßöffnung (112) benachbart zum unteren Ende der Kammer.

10. Deckel (210) zum Verschließen des Füll- und Be- und Entlüftungsrohres eines Treibstofftanks, wobei der Deckel so ausgebildet ist, daß er die Strömung von Luft und Treibstoffdampf in den Tank und aus diesem heraus ermöglicht, jedoch den Austritt von Flüssigkeit in allen Ausrichtungen des Tanks ausgehend von der vertikalen Richtung zur umgekehrten Richtung verhindert, wobei der Deckel folgende Teile umfaßt: Einen Deckelkörper (230), mit dem Deckelkörper verbundene Einrichtungen, die diesen an dem Rohr (212) zum Verschließen befestigen, und eine Deckelabdeckplatte (228), die an dem Deckelkörper (230) befestigt ist und so ausgebildet ist, daß sie sich über einen Teil des Deckels (210) in einer Richtung allgemein quer zur Achse des Rohres (212) erstreckt, dadurch gekennzeichnet, daß eine Durchlaßkanal nach einem der Ansprüche 1 bis 9 vorgesehen ist, und daß ein Deckelkörper-Kanal das Äußere des Deckelkörpers (230) mit dem Auslaß des Be- und Entlüftungs Durchlaßkanals verbindet.

11. Deckel (210) nach Anspruch 10, dadurch gekennzeichnet, daß die dem Deckelkörper-Kanal zugeordneten Einrichtungen eine Vielzahl von einen niedrigen Schmelzpunkt aufweisenden Deckelkörper-Einsätzen (234) einschließen, die so ausgebildet sind, daß sie schmelzen, wenn die Temperatur den vorgegebenen Betrag überschreitet, daß die Deckel-Abdeckplatte (228) an dem Deckelkörper (230) mit Hilfe von Schrauben befestigt ist, die in die Einsätze eingeschraubt sind, wobei die Schrauben so ausgebildet sind, daß sie freigegeben werden, wenn die Einsätze (234) schmelzen.

12. Deckel (210) nach Anspruch 10, dadurch gekennzeichnet, daß der Deckelkörper-Kanal eine Vielzahl von Kanälen (250, 270) einschließt, die sich außerhalb von dem Auslaß allgemein entlang der Innenseite der Abdeckplatte (228) erstrecken.

13. Deckel (210) nach Anspruch 10, dadurch gekennzeichnet, daß eine Verriegelungseinrichtung (32) zum Verriegeln des Deckels (210) auf dem Rohr (212) vorgesehen ist, wenn der Deckel (210) an dem Rohr (212) befestigt ist, und daß die Verriegelungseinrichtung (132) sich nach innen in den Deckelkörper erstreckt und mit Abstand von dem Be- und Entlüftungs-Durchlaßkanal angeordnet ist und so ausgebildet ist, daß sie einen Verriegelungseingriff im Inneren des Rohres (212) herstellt.

**Revendications**

1. Conduit (24) adapté pour permettre un écoulement de gaz mais pour se fermer à un écoulement de liquide, ledit conduit possédant une entrée normalement inférieure et une sortie normalement supérieure et comprenant: une ouverture de sortie circulaire (80) à l'extrémité supérieure d'une chambre; une bille obturatrice flottante légère (90) contenue dans ladite chambre (94), ladite bille possédant un diamètre supérieur à celui de ladite ouverture de sortie et étant soulevée de façon à venir s'appuyer contre ladite ouverture de sortie lorsque le liquide pénètre dans ladite chambre jusqu'à un niveau prédéterminé, pour fermer ladite ouverture de sortie et arrêter la sortie de liquide à travers l'ouverture de sortie, caractérisé par des moyens formant paroi qui délimitent une chambre de rotation (94) positionnée entre ladite entrée et ladite sortie et qui possèdent des sections transversales intérieures de forme générale circulaire; au moins une ouverture d'entrée de paroi latérale débouchant dans ladite chambre étant orientée tangentiellement par rapport aux sections transversales de ladite chambre (94), de sorte que le gaz passant à travers la chambre de rotation fait tourner la bille obturatrice (90, 294) dans la chambre et l'empêche de venir en appui sur ladite ouverture de sortie.

2. Conduit selon la revendication 1, caractérisé par une bille lourde (92, 293) logée dans ledit conduit (24) au-dessous de ladite bille obturatrice légère flottante, adaptée pour venir par gravité s'appuyer contre ladite bille légère (90, 294) et pour forcer ladite bille flottante légère à venir en appui contre ledit siège en réponse à une inclinaison dudit conduit supérieur à une valeur prédéterminée.

3. Conduit selon la revendication 1, dans lequel lesdits moyens délimitant les sections transversales de ladite chambre comprennent des sections transversales qui possèdent une aire décroissante lorsqu'on s'éloigne de ladite entrée et qu'on parvient à proximité de ladite ouverture de sortie (80), de sorte que, au fur et à mesure que les diamètres deviennent plus petits, le mouvement de la bille (90, 294) devient plus rapide pour créer une force centripète ayant une composante dirigée vers le bas qui, pendant le dégazage normal, empêche la bille de se rapprocher du siège formé sur ladite ouverture de sortie.

4. Conduit selon la revendication 1, dans lequel lesdits moyens de ladite ouverture d'entrée servant à diriger l'écoulement de gaz le long de la surface desdites sections circulaires comprennent la conformation en forme de fente (106, 306) de ladite ouverture d'entrée, la fente étant allongée dans la direction générale d'un axe qui passe par les centres desdites sections circulaires.

5. Conduit selon la revendication 2, comprenant: une deuxième bille lourde (84, 290) associée audit conduit pour éloigner ladite bille légère (90, 294) de sa position de fermeture du conduit lorsque le liquide se trouve au-dessous d'un niveau prédéterminé et que le conduit n'est pas incliné, de sorte que le conduit est ouvert pour la mise à l'air libre.

6. Conduit selon la revendication 1, dans lequel lesdit conduit d'écoulement est normalement ouvert.

7. Conduit selon la revendication 1, comprenant des moyens additionnels de dérivation qui peuvent entrer en jeu lorsque la pression régnant dans la voie excède une valeur prédéterminée.

8. Conduit selon la revendication 7, comprenant des moyens associés audit conduit pour agrandir notablement la surface disponible pour l'écoulement lorsque la température régnant dans la voie excède une valeur prédéterminée.

9. Conduit selon la revendication 1, comprenant une ouverture d'évacuation de liquide (112) voisine du fond de ladite chambre.

10. Bouchon (210) destiné à fermer un tube de remplissage et de mise à l'air libre de réservoir de carburant, ledit bouchon étant adapté pour laisser l'air et les vapeurs de carburant pénétrer dans le réservoir ou en sortir mais étant adapté pour empêcher le liquide de s'échapper quelle que soit l'orientation du réservoir, depuis la position verticale jusqu'à la position renversée, ledit bouchon comprenant:
un corps de bouchon (230;
des moyens associés au corps du bouchon pour le fixer au tube (212) pour la fermeture;
une plaque formant couvercle de bouchon (228) fixée au corps (230) du bouchon et adaptée pour s'étendre à travers une partie du bouchon (210), dans une direction générale transversale à l'axe du tube (212), caractérisé par une conduit selon les revendications 1 à 9 et par un conduit du corps qui relie l'extérieur du corps (230) à la sortie du conduit de mise à l'air libre.

11. Bouchon (210) selon la revendication 10, dans lequel lesdits moyens associés audit conduit du corps comprennent des éléments rapportés (234) à bas point de fusion insérés dans le corps, qui sont adaptés pour fondre lorsque la température excède ladite valeur prédéterminée; ledit couvercle (228) du bouchon étant fixé audit corps (230) du bouchon par des vis vissées dans lesdits éléments rapportés, lesdites vis étant adaptées pour être libérées lorsque lesdits éléments rapportés (234) fondent.

12. Bouchon (210) selon la revendication 10, dans lequel ledit conduit du corps comprend une pluralité de conduits (250, 270) qui s'étendent vers l'extérieur à partire de ladite sortie, généralement le long de la face interne de ladite plaque formant couvercle (228).

13. Bouchon (210) selon la revendication 10, comprenant un dispositif de verrouillage (32) servant à verrouiller ledit bouchon (210) sur ledit tube (212) lorsque ledit bouchon (210) est fixé sur ledit tube (212), ledit dispositif de verrouillage (132) s'étendant vers l'intérieur dans le volume intérieur dudit corps et étant espacé dudit conduit de mise à l'air libre, et éant adapté pour entrer en prise pour le verrouillage avec l'intérieur dudit tube (212).

Fig.1

Fig.2

Fig.4

Fig.3

Fig.5

Fig. 6

0 087 493

Fig. 7

Fig. 8

Fig. 9

*Fig. 10*

*Fig. 11*

*Fig. 12*

*Fig.13*

*Fig.14*

*Fig.15*

0 087 493

**Fig.17**

**Fig.19**

**Fig.18**

6